# EUROPÄISCHE PATENTSCHRIFT

(11) **EP 0 755 903 B1**
(45) Veröffentlichungstag und Bekanntmachung des Hinweises auf die Patenterteilung: **16.06.1999**
(21) Anmeldenummer: 96111082.2
(22) Anmeldetag: 10.07.1996
(51) Int. Cl.: C04B 28/14, E04C 2/26, E04B 1/94

(54) **Bauplatte mit hoher Feuerresistenz, Verfahren zu ihrer Herstellung und ihre Verwendung**
Building board with high fire resistance, process for its manufacture and its use
Panneau de construction à haute résistance au feu, procédé de sa fabrication et son utilisation

(30) Priorität: 26.07.1995 DE 19527227
(43) Veröffentlichungstag der Anmeldung: 29.01.1997
(73) Patentinhaber: Gebr. Knauf Westdeutsche Gipswerke KG, D-97343 Iphofen (DE)
(72) Erfinder: Ruf, Herbert, 91413 Neustadt/Aisch (DE); Scheller, Lothar, Dr., 97346 Iphofen (DE); Neuhauser, Gerhard, Dr., 97318 Kitzingen (DE); Peter, Anton, 88131 Lindau (DE)
(74) Vertreter: Werner, Hans-Karsten, Dr.Dipl.-Chem.

(56) Entgegenhaltungen:
- EP-A- 0 427 063
- EP-A- 0 716 194
- FR-A- 2 491 916
- US-A- 4 632 865
- CHEMICAL ABSTRACTS, vol. 93, no. 18, 3.November 1980 Columbus, Ohio, US; abstract no. 172636y, Seite 284; XP002028041 & IL 51 349 A (ATOMIC ENERGY COMMISSION)

## Beschreibung

Gegenstand der vorliegenden Erfindung ist eine Bauplatte mit hoher Feuerresistenz, insbesondere auch zum Einsatz im Kompositbau, speziell zwischen Metallprofilen und Metallblechen, enthaltend ein abgebundenes Gemisch aus Calciumsulfat-Dihydrat und Alaun (z.B. K Al (SO₄)₂ x 12 H₂O) im Verhältnis 75:25 bis 40:60 Gew.-%, vorzugsweise 50:50 Gew.-%, sowie Verfahren zur Herstellung derselben, vorzugsweise kontinuierlich auf einer üblichen Anlage zur Herstellung von Gipskartonplatten.

Im Bereich hoch-feuerfester Bauelemente werden zunehmend höhere Anforderungen an das Verhalten aller Komponenten gestellt. So ist z.B. aus JP 74-021 557 B ein Material bekannt, das aus 22 % eines Mörtels als Bindemittel, 22 % Gips CaSO₄ x 2 H₂O, 45 % Wasser und 11 % Kaliumalaun K Al (SO₄)₂ x 12 H₂O besteht. Dieses Material zeichnet sich durch niedrige Alkalität (pH 7,6) aus und besitzt, einschichtig aufgetragen, sehr gute Feuerwiderstandseigenschaften.

Ferner ist aus IL 51349 ein Feuerschutzmaterial bekannt, das - zwischen Sicherheitswände eingebaut - für gute Brandschutzeigenschaften sorgt. Dieses Material besteht aus Ammoniumalaun NH₄ Al (SO₄)₂ x 12 H₂O und Gips CaSO₄ x 2 H₂O sowie Portlandzement oder einem Epoxidharz als Bindemittel.

Allen oben beschriebenen Materialien ist gemeinsam, daß sie bei höheren Temperaturen in stark endothermen Reaktionen Wasser abspalten und damit brandverhindernd wirken. Diese Materialien müssen stets mit einem Bindemittel versetzt und manuell, z.B. durch Gießen verarbeitet werden.

Die DE-OS 17 84 657 beschreibt ein Verfahren zum kontinuierlichen Herstellen von Formkörpern aus Gips und verfilzenden Fasern durch Aufbringen des trockenen Materials auf eine sich endlos bewegende Formfläche und Befeuchten des Materials mit nur einer solchen Wassermenge, die wenig über der zur Abbindung notwendigen Menge liegt, wobei der Austrag, die Dosierung und Verteilung des trockenen Materials aus den Vorratsilos auf einem vorgelagerten Vorformband erfolgen, wobei ein zweischichtiger, die endgültige Plattenform aufweisender, lockerer Strang gebildet wird. Nach der Zuführung des Abbindewassers wird der befeuchtete Strang in Richtung zur Formunterlage verdichtet. Dem Abbindewasser können Zuschlagsstoffe gelöst oder in dispergierter Form beigemischt sein, die den Abbindevorgang des Gipses beschleunigen oder verzögern oder sonstige Eigenschaften des Gipses beeinflussen. Derartige Zuschlagsstoffe können sein Netzmittel, Kunstharze, Alaun, Pigmente, Leime und Salze.

Die DE-OS-16 46 467 beschreibt ein Verfahren zur Herstellung von Hohlkörpern, wie Rohre oder Lüftungsschächte aus kunstharzvergütetem und glasfaserverstärktem Gips. Dabei wird auch ein pulverförmiges Vorkondensat aus Formaldehyd und Alaungipsbinder eingesetzt.

Die US-PS-3,885,980 beschreibt einen Behälter, der gegen hohe Temperaturen schützen soll und der hergestellt ist aus einer Mischung von Gips und unbrennbaren Füller wie Glasfasern etc. Vorzugsweise wird körniges Magnesiumsulfatheptahydrat verwendet, um einen Schutz gegen Temperaturen bis 1.400°C zu erreichen.

Die Erfindung hat sich die Aufgabe gestellt, eine Bauplatte mit hoher Feuerresistenz zu entwickeln, die besonders einfach im Kompositbau, speziell auch zwischen Metallprofilen und Metallblechen eingebaut werden kann, welche ein abgebundenes Gemisch aus Calciumsulfat-Dihydrat und Alaun im Verhältnis 75:25 bis 40:60 Gew.-% enthält. Optimale Eigenschaften besitzt dieses Gemisch, wenn das Verhältnis 1:1 ist. Durchaus gute und brauchbare Eigenschaften bezüglich der Feuerresistenz besitzen aber auch Gemische im Verhältnis 75:25 bis 40:60 Gew.-% CaSO₄ x 2 H₂O und z.B. K Al (SO₄)₂ x 12 H₂O.

Die Erfindung hat sich dabei die weitere Aufgabe gestellt, diese Bauplatte billiger und einfacher herzustellen, vorzugsweise auf üblichen Anlagen zur Herstellung von Gipskartonplatten, wobei als Bindemittel α-CaSO₄ x ½ H₂O fungiert und weitere Bindemittel nicht erforderlich sind. Weiterhin sollen gute mechanische Eigenschaften der Bauplatte erreicht werden, ohne daß die Feuerresistenzeigenschaften darunter leiden. Für die Verarbeitung dieser Bauplatte ist es vor allem erstrebenswert, daß die Elastizität und Biegezugfestigkeit verbessert werden, die Bruchlast hoch und das Raumgewicht so hoch wie möglich ist, um Zwischenschichten aus diesem Material dünnhalten zu können.

Diese Aufgabe konnte jetzt gelöst werden durch eine Bauplatte gemäß Anspruch 1 und das Verfahren gemäß Anspruch 4. Besonders bewährt haben sich Glasfaservliese, welche auf ihrer Außenseite beschichtet sind mit einer überwiegend aus Calciumsulfat und geringen Mengen eines organischen Bindemittels bestehenden dünnen Vorbeschichtung. Dabei sollte diese Vorbeschichtung maximal 6 Gew.-% organisches Material enthalten, da anderenfalls die Feuerresistenzeigenschaften verschlechtert werden können und es auch zu unerwünschter Rauchbildung kommen kann.

Zur Herstellung dieser Bauplatte wird ein pastöses Gemisch, bestehend aus ca. 50 Gew.-Teilen α-Halbhydrat und ca. 50 Gew.-Teilen Alaun (z.B. K Al (SO₄)₂ x 12 H₂O), mit 0,2 bis 0,5 Gew.-Teilen Verzögerer sowie der notwendigen Menge Anmachwasser und gegebenenfalls üblichen Zusätzen zur Herstellung von Gipsbauplatten auf einer üblichen Anlage zur Herstellung von Gipskartonplatten auf ein gegebenenfalls auf der Außenseite vorbeschichtetes Glasfaservlies aufgetragen und mit einem gegebenenfalls auf der Außenseite vorbeschichteten Glasfaservlies abgedeckt und dieses Material nach Beginn des Abbindens so getrocknet, daß die Massetemperatur unter 70°C bleibt.

Diese Verfahrensmaßnahmen haben sich als unbedingt notwendig erwiesen, um zu den erwünschten Ergebnissen zu kommen. Die Versuche, mit Stuckgips (d.h. β-Halbhydrat) zu arbeiten, haben nicht die nötigen Raumdichten und Festigkeiten geliefert. Ohne Einlagerung der Glasfaservliese werden nicht die gewünschten mechanischen Eigenschaften erhalten. Die Vorbeschichtung der Glasfaservliese mit einem Gemisch aus überwiegend Calciumsulfat-β-Halbhydrat oder Anhydrit und geringen Mengen eines organischen Bindemittels ermöglichen ein besonders gutes und leichtes Handhaben des Verfahrens in den üblichen Anlagen zur Herstellung von Gipskartonplatten. Die Vorbeschichtung dichtet darüber hinaus die Glasfaservliese so weit ab, daß kein alaunhaltiges Material aus dem Kern bis zur Außenseite der Glasfaservliese vordringt.

Der Zusatz von deutlich erhöhten Mengen an Verzögerer, nämlich 0,2 bis 0,5 Gew.-Teilen bezogen auf ca. 100 Gew.-Teile des Gemisches aus α-Halbhydrat und Alaun, ist notwendig, da der Alaun das Abbinden des α-Halbhydrats so stark beschleunigt, daß das Material nicht auf üblichen Anlagen zur Herstellung von Gipskartonplatten gehandhabt werden kann. Als Verzögerer hat sich z.B. das Natriumsalz der Diethylentriamin-Pentaessigsäure bewährt.

Erfindungswesentlich ist weiterhin, daß das abbindende bzw. abgebundene Material nur so getrocknet wird, daß die Massetemperatur unter 70°C bleibt. Bei höheren Temperaturen verliert Alaun bereits einen Teil seines Kristallwassers, was für das erfindungsgemäße Produkt unbedingt vermieden werden sollte. Untersuchungen des erfindungsgemäßen Materials haben ergeben, daß sowohl die mechanischen Eigenschaften als auch das Brandverhalten voll befriedigend sind. Nach DIN 4102, Teil 4 (Brandverhalten von Baustoffen und Bauteilen) beträgt z.B. die Mindestdicke ein- oder zweischaliger nichttragender Wände aus Gipskarton-Bauplatten F mit Ständern und/oder Riegeln aus Stahlblechprofilen oder Gipskartonstreifenbündeln sowie Mindestrohdichte der Dämmschicht bei F 30-A 12,5 mm, bei F 60-A 2 x 12,5 mm, alternativ 1 x 25 mm, bei F 90-A 15 x 12,5 mm und bei F 120-A 2 x 18 mm. Dagegen konnte mit erfindungsgemäßen Bauplatten der Dicke 9,5 mm (Gips:Alaun = 1:1), Plattengewicht ∼ 12,2 bis 12,4 kg/m² (Raumgewicht ca. 1400 kg/m³) bei doppelter Beplankung und Trennwandfilz mühelos F 60-A erreicht werden. Die Überschreitung der maximal zulässigen Temperaturerhöhung von 180 K erfolgte erst in der 79. Minute. Dagegen wird die maximal zulässige Temperaturerhöhung bei gleicher Konstruktion mit GKF der Stärke 12,5 mm in der 62. Minute erreicht. Das Material kann daher verwendet werden zum Einbau im Kompositbau sowie zur Ausfüllung des Zwischenraumes zwischen zwei Blechplatten, beispielsweise Aluminiumplatten. Das erfindungsgemäße Material kann auch leicht geschnitten und eingebaut werden, da es elastisch ist und eine gute Biegezugfestigkeit aufweist.

Geeignet ist das Material weiterhin zum Aufbau von Kabelkanälen. Es kann aufgrund der Außenschichten, enthaltend Glasfaservlies, gut verklebt, verputzt oder gestrichen werden. Das Material kann weiterhin genagelt, verschraubt, gesägt und gebohrt werden, so daß es allen praktischen Anforderungen an ein derartiges Material genügt.

Sofern die Vorbeschichtung der Glasfaservliese mit einem Calciumsulfat und geringen Mengen eines organischen Bindemittels nicht zugänglich oder nicht erwünscht ist, kann das Verfahren auch mit unbeschichteten Glasfaservliesen durchgeführt werden. Um eine Verschmutzung der Anlage zur Herstellung von Gipskartonplatten durch die durch das Glasfaservlies durchtretende Abbindemasse zu vermeiden, kann das Glasfaservlies gewünschtenfalls auch mit einer Papierschicht unterlegt werden, die vor Gebrauch des fertigen Materials wieder entfernt wird.

## Patentansprüche

1. Bauplatte mit hoher Feuerresistenz, deren beide Oberflächen mit einem Glasfaservlies ummantelt sind, bestehend aus einem abgebundenen Gemisch eines 0,2 bis 0,5 Gew.-% Verzögerer enthaltenden α-Halbhydrats und Alaun im Verhältnis 75:25 bis 40:60 Gew.-%.

2. Bauplatte gemäß Anspruch 1 mit einem Verhältnis von 50 zu 50 Gew.-%.

3. Bauplatte gemäß Anspruch 1 oder 2, dadurch gekennzeichnet, daß die Glasfaservliese auf ihren Außenseiten mit einer aus einem Gemisch aus überwiegend Calciumsulfat-β-Halbhydrat oder Anhydrit und geringen Mengen eines organischen Bindemittels bestehenden dünnen Vorbeschichtung versehen sind.

4. Verfahren zur Herstellung einer Bauplatte mit hoher Feuerresistenz gemäß den Ansprüchen 1 bis 3 durch Auftragen eines pastösen Gemisches, bestehend aus 75 bis 40 Gew.-% α-Halbhydrat und 25 bis 60 Gew.-% Alaun, mit 0,2 bis 0,5 Gew.-% Verzögerer sowie der notwendigen Menge Anmachwasser und gegebenenfalls anderen zur Herstellung von Gipsbauplatten verwendeten Zusätzen auf einer üblichen Anlage zur Herstellung von Gipskartonplatten auf ein gegebenenfalls auf der Außenseite vorbeschichtetes Glasfaservlies, Abdecken mit einem gegebenenfalls auf der Außenseite vorbeschichteten Glasfaservlies und Trocknung des abgebundenen Materials unterhalb von 70°C Massetemperatur.

5. Verfahren gemäß Anspruch 4, dadurch gekennzeichnet, daß Glasfaservliese, deren Außenseiten mit einer aus einem Gemisch aus überwiegend Calciumsulfat-β-Halbhydrat oder Anhydrit und geringen Mengen eines organischen Bindemittels bestehenden dünnen Vorbeschichtung versehen sind, eingesetzt werden.

6. Verwendung der Bauplatte gemäß den Ansprüchen 1 bis 3 oder deren Zuschnitten im Kompositbau, speziell zwischen Metallprofilen und Metallblechen.

## Claims

1. A building board with high fire resistance, both surfaces thereof being jacketed with a glass-fibre mat, said building board consisting of a set mixture of an α-hemihydrate containing from 0.2 to 0.5 % by weight of a retarder and alum at a ratio from 75:25 to 40:60 % by weight.

2. The building board according to claim 1 with a ratio from 50 to 50 % by weight.

3. The building board according to claim 1 or 2, characterized in that the glass-fibre mats are provided with a thin precoating consisting of a mixture of predominantly β-calcium sulfate hemihydrate or anhydrite and small amounts of an organic binder on the outer surfaces thereof.

4. A process for manufacturing a building board with high fire resistance according to claims 1 to 3 by coating a pasty mixture consisting of from 75 to 40 % by weight of α-hemihydrate and from 25 to 60 % by weight of alum and from 0.2 to 0.5 % by weight retarder and the required amount of mixing water and optionally further additives used for manufacturing gypsum building boards in a common plant for manufacturing gypsum building boards on a glass-fibre mat optionally precoated on the outer surface thereof, covering with a glass-fibre mat optionally precoated on the outer surface thereof, and drying the set material at a material temperature below 70 °C.

5. The process according to claim 4, characterized in that there are used glass-fibre mats, the outer surfaces thereof being provided with a thin precoating consisting of a mixture of predominantly β-calcium sulfate hemihydrate or anhydrite and small amounts of an organic binder.

6. Use of the building board according to claims 1 to 3 or blanks thereof for composite construction, in particular between metal sections and metal sheets.

## Revendications

1. Plaque de construction ayant une grande résistance au feu, dont les deux faces sont enveloppées par un non-tissé de fibres de verre, formée d'un mélange durci d'un α-semi-hydrate contenant de 0,2 à 0,5 % en poids de retardateur, et d'alun dans des proportions de 75:25 à 40:60 % en poids.

2. Plaque de construction selon la revendication 1 présentant des proportions de 50:50 % en poids.

3. Plaque de construction selon la revendication 1 ou 2, caractérisée en ce que le non-tissé de fibres de verre est pourvu, sur ses faces externes, d'un pré-revêtement mince formé d'un mélange composé essentiellement de β-semi-hydrate de sulfate de calcium ou d'anhydrite et de petites quantités d'un liant organique.

4. Procédé de fabrication d'une plaque de construction ayant une grande résistance au feu selon les revendications 1 à 3 par application d'un mélange pâteux formé de 75 à 40 % en poids de α-semi-hydrate et de 25 à 60 % en poids d'alun, avec 0,2 à 0,5 % en poids de retardateur ainsi que la quantité nécessaire d'eau de gâchage et éventuellement d'autres additifs utilisés pour la fabrication de plaques de construction en plâtre, sur un support usuel pour la fabrication de plaques de placoplâtre sur un non-tissé de fibres de verre éventuellement pré-revêtu sur la face externe, par recouvrement avec un non-tissé de fibres de verre éventuellement pré-revêtu sur la face externe, et par séchage du matériau pris à une température de la masse inférieure à 70°C.

5. Procédé selon la revendication 4, caractérisé en ce qu'on utilise des non-tissés de fibres de verre dont les faces externes sont pourvues d'un pré-revêtement mince formé d'un mélange composé essentiellement β-semi-hydrate de sulfate de calcium ou d'anhydrite et de petites quantités d'un liant organique.

6. Utilisation de la plaque de construction selon les revendications 1 à 3 ou de découpes de celle-ci dans une construction composite, spécialement entre des profilés de métal et des tôles de métal.
